(19) Europäisches Patentamt
European Patent Office
Office européen des brevets

(11) **EP 2 372 937 B1**

(12) **EUROPEAN PATENT SPECIFICATION**

(45) Date of publication and mention
of the grant of the patent:
**16.08.2017 Bulletin 2017/33**

(51) Int Cl.:
*H04L 1/00* (2006.01)　　　*H04L 1/06* (2006.01)
*H04W 72/04* (2009.01)

(21) Application number: **11275055.9**

(22) Date of filing: **29.03.2011**

(54) **Automatic communication mode selection in a cellular telecommunications network**

Automatische Wahl der Kommunikationsart in einem zellularen Telekommunikationsnetzwerk

Sélection automatique du mode de communication dans un réseau de télécommunication cellulaire

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2010 ES 201030466**

(43) Date of publication of application:
**05.10.2011 Bulletin 2011/40**

(73) Proprietors:
• **Vodafone Group PLC**
**Newbury**
**Berkshire RG14 2FN (GB)**
• **Vodafone España, S.A.U.**
**28108 Alcobendas (ES)**
Designated Contracting States:
**ES**

(72) Inventors:
• **De Pasquale, Andrea**
**E-28050, Madrid (ES)**
• **Le Pezennec, Yannick**
**E-28050, Madrid (ES)**
• **McWilliams, Brendan**
**E-28050, Madrid (ES)**
• **Dominguez Romero, Francisco**
**E-28050, Madrid (ES)**

(74) Representative: **Boult Wade Tennant**
**Verulam Gardens**
**70 Gray's Inn Road**
**London WC1X 8BT (GB)**

(56) References cited:
**WO-A1-2010/135458　　US-A1- 2007 049 218**

• **"3rd Generation Partnership Project; Technical Specification Group Radio Access Network; Dual-Cell HSDPA operation; (Release 8)", 3GPP STANDARD; 3GPP TR 25.825, no. V1.0.0, 1 May 2008 (2008-05-01), pages 1-67, XP050369180, FRANCE**
• **DANIELLE MORAIS DE ANDRADE ET AL: "Performance Evaluation on Dual-Cell HSDPA Operation", IEEE 70TH VEHICULAR TECHNOLOGY CONFERENCE - VTC 2009-FALL, 20 September 2009 (2009-09-20), pages 1-5, XP031600232, NJ, USA ISBN: 978-1-4244-2514-3**

**Description**

*Field of the Invention*

The present invention is comprised within the field of mobile telecommunications. More specifically, the invention relates to a system for carrying out a dynamic selection of HSPA+ technology (MIMO or DC, Dual Cell) for mobile terminals able to support MIMO as well as a DC connection.

*Background of the Invention*

HSDPA (High Speed Downlink Packet Access) is a packet-based data service in the 3rd generation W-CDMA (Wideband Code Division Multiple Access) systems, which provides high-speed data transmission (with different theoretical peak download rates according to the HSDPA technology step e.g. 7.2/10.8/16.2/21.6/28.8/43.2 Mbps over a 5MHz bandwidth) to support multimedia services.

In order to reach the theoretical peak rates of respectively 28.8 Mbps with 3GPP Release 7 and 43.2 Mbps with Release 8, the MIMO (Multiple Input Multiple Output) feature with respectively 16QAM and 64QAM modulation is used in HSDPA, in which multiple antennas are implemented at both base station (Node B) and mobile terminals (UE: User Equipment).

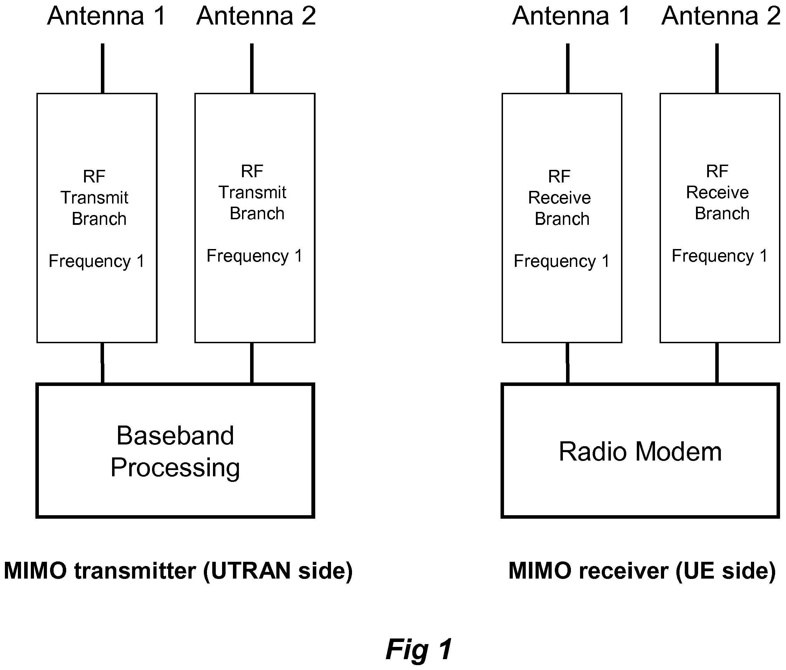

The basic MIMO feature as standardised in 3GPP Release 7 requires (just) two transmitter antennas (at the node B) and two receiving antennas (at the UE) using a common carrier, as shown in **Figure 1**, which illustrates a diversity/MIMO system configuration with two RF transmit branches (UTRAN side) and two receive antennas (UE side) which operate at the same frequency, the required baseband processing for MIMO being common for both RF branches at UTRAN and UE side. At UTRAN side, the transmitted data is divided into two data streams and transmitted through the two antennas using the same radio resource (same time i.e. Transmission Time Interval (TTI) and HSDPA codes). The two streams of data are recovered by the UE from the signals received via its two antennas. Clearly then, the MIMO feature needs support in MIMO-enabled terminals as well as in the network.

The patent application US 2007/049218 A1 describes a MIMO based system in which a switching between different communication modes is performed.

In order to deploy MIMO at the node B and to transmit two parallel data streams, two power amplifiers are required per sector (one for each of the two antennas). In order not to limit the use of an entire carrier for MIMO only (5MHz), it is more efficient and practical to use the same carrier as devices that are not MIMO-enabled (e.g. HSDPA legacy terminals) to utilise all available capacity.

MIMO technology is an important step in the evolution of HSDPA, as it provides higher data rates in downlink whilst further improving spectrum efficiency.

A known technique for increasing the capacity of a cellular telecommunications network such as 2G, HSDPA, LTE, WiFi or WiMAX is to bond together two or more carriers. This approach is called carrier or spectrum aggregation (or DC, Dual Cell). MIMO (Multiple-Input Multiple-Output) functionality was standardised as part of the 3GPP Release 7 set of features, whilst Dual Cell (DC) has been standardised in Release 8 for HSDPA operation but only for non-MIMO HSDPA. Therefore a Release 8 DC terminal can either be operated as DC or MIMO but not both simultaneously (however, operation of DC with MIMO will be possible in Release 9), and correspondingly a cell capable of supporting DC and MIMO has to decide which of these two functions to activate for Release 8 UEs (User Equipments) present (i.e. MIMO operation or Dual Cell operation).

The 3GPP TS (Technical Specification) 25.306 defines the HSDPA UE categories. The following table captures the capabilities for UE up to Release 8.

| HS-DSCH category | Max number of HS-DSCH codes received | Max number of bits of an HS-DSCH transport block received within a TTI | Supported modulations MIMO and Dual cell operation | Max Throughput |
|---|---|---|---|---|
| Category 1 | 5 | 7298 | QPSK, 16QAM (MIMO not supported) | 3,6 |
| Category 2 | 5 | 7298 | | 3,6 |
| Category 3 | 5 | 7298 | | 3,6 |
| Category 4 | 5 | 7298 | | 3,6 |
| Category 5 | 5 | 7298 | | 3,6 |
| Category 6 | 5 | 7298 | | 3,6 |
| Category 7 | 10 | 14411 | | 7,2 |
| Category 8 | 10 | 14411 | | 7,2 |
| Category 9 | 15 | 20251 | | 10,1 |
| Category 10 | 15 | 27952 | | 14,0 |
| Category 11 | 5 | 3630 | QPSK (MIMO or DC not supported) | 1,8 |
| Category 12 | 5 | 3630 | | 1,8 |
| Category 13 | 15 | 35280 | QPSK, 16QAM, 64QAM (MIMO or DC not supported) | 17,6 |
| Category 14 | 15 | 42192 | | 21,1 |
| Category 15 | 15 | 23370 | QPSK, 16QAM | 23,4 |
| Category 16 | 15 | 27952 | MIMO supported | 28,0 |
| Category 17 | 15 | 35280 | QPSK, 16QAM, 64QAM | 17,6 |
| Category 17 | 15 | 23370 | QPSK, 16QAM MIMO supported | 23,4 |
| Category 18 | 15 | 42192 | QPSK, 16QAM, 64QAM | 21,1 |
| Category 18 | 15 | 27952 | QPSK, 16QAM MIMO supported | 28,0 |
| Category 19 | 15 | 35280 | QPSK, 16QAM, 64QAM MIMO supported | 35,3 |
| Category 20 | 15 | 42192 | | 42,2 |
| Category 21 | 15 | 23370 | Dual Cell QPSK, 16QAM | 23,4 |
| Category 22 | 15 | 27952 | | 28,0 |
| Category 23 | 15 | 35280 | Dual Cell QPSK, 16QAM, 64QAM | 35,3 |
| Category 24 | 15 | 42192 | | 42,2 |

UE categories 15 to 20 are MIMO capable with up to 42 Mbps of bit rate at physical layer without any physical layer coding -but not Dual Cell-. UE Categories 21 to 24 define the Dual Cell capable UEs that can also be MIMO capable. The UE will signal its category to the network and this will provide an indication to the network if it is DC capable or not -regardless of whether DC is in operation within the cells the UE finds itself in-.

MIMO UEs of Release 8 use only 1 WCDMA carrier of 5 MHz whilst Dual Cell capable UE use 2 contiguous carriers (10 MHz spectrum).

UEs of category 21 to 24 can support both MIMO and DC, it is the network which must decide which of these two functionalities it should operate i.e. configure one but not the other.

In short there will be Node Bs operating with both MIMO and DC active within the same cell. MIMO will be used for UEs that do not support DC; DC will be used by UEs that will support DC only, but for the UE supporting both DC and MIMO capability, an efficient rule has to be established in order to decide which technology should be used for each of these UE when entering the system. These rules have not been specified by 3GPP. It should be noted that in Rel'9 HSPA evolves towards the joint use of Dual Carrier and MIMO for data connections. Following the evolution from these 3GPP capabilities in time, one UTRAN cell could support MIMO (Rel'7) then DC or MIMO on a per user basis (Rel'8) to end up with full DC MIMO capabilities (Rel'9) allowing the joint use of both capabilities for a single user connection.

The present invention overcomes the commented problems by providing a method for automatically assigning to a UE capable of both MIMO and DC (but not simultaneously) the best technology to be used (MIMO or DC) according to the context in terms of radio conditions and traffic. This way the end user would obtain the best possible performance. Thus, the invention increases the data throughput supported by a mobile broadband terminal and increases the capacity of the supporting network.

It is well-known that abbreviations and acronyms are frequently used in the mobile telephony field. Below is a glossary of acronyms/terms used throughout the present specification:

| | |
|---|---|
| 3GPP | The 3rd Generation Partnership Project |
| CPICH | Common Pilot Channel |
| CQI | Channel Quality Indicator |
| DC | Dual Cell |
| HSPDA | High Speed Downlink Packet Access |
| KPI | Key Performance Indicators |
| MAC-d | Medium Access Control- dedicated |
| MIMO | Multiple-Input Multiple-Output |
| QAM | Quadrature Amplitude Modulation |
| QPSK | Quadrature Phase-Shift Keying |
| RNC | Radio Network Controller |
| SPI | Scheduling Priority Indicator |
| SRNC | Serving Radio Network Controller |
| TTI | Transmission Time Interval |
| UE | User Equipment |
| WCDMA | Wideband Code Division Multiple Access |

*Description of the Invention*

The invention relates to a network element in a cellular telecommunications network for improving network performance according to claim 1, and to a corresponding method according to claim 8. Preferred embodiments of the network element and of the method are defined in the dependent claims. The present invention is defined and limited only by the scope of appended claims 1-13.

*Brief Description of the Drawings*

A series of drawings which aid in better understanding the invention and which are expressly related with an embodiment of said invention, presented as a non-limiting example thereof, are very briefly described below.

Figure 1 shows the transmitter and receiver arrangement required for MIMO.
Figure 2 shows, as an example, a graphic of transmitted TX Power in HS transmission and its standard deviation, used as input parameters in the invention.
Figure 3 illustrates an example of MIMO gain depending on the CQI of the mobile terminal.

*Description of a Preferred Embodiment of the Invention*

When a UE is capable to support both MIMO and DC technology there is the need to decide which technology is the best to use.

When at least 2 carriers are available and a cell supports the activation of MIMO and DC at the same time, and when an incoming user with a Release 8 UE that can support both MIMO or DC (i.e. not simultaneously) establishes a connection, there is a need to decide if the experience will be optimised by providing MIMO or providing Dual Cell.

In order to compare performance of MIMO and DC with a Release 8 UE, HSDPA performance with 15 codes and 16QAM or 64QAM modulation (whichever modulation is available on the MIMO carrier for the HSDPA transmissions) is taken as a single carrier baseline reference configuration. The performance gain in terms of user throughput of MIMO (due to the higher spectral efficiency) with respect to a 64QAM single carrier reference baseline is around 20-30% in bad to medium radio conditions, and is around 50-60% in good radio conditions. These radio conditions, which can be expressed in terms of CQI, are sent by the UE to the Node B.

The DC technology consists of using 2 carriers simultaneously for a given user, with the capability to use up to 30 HSDPA codes (15 codes per carrier) using QPSK, 16QAM or 64QAM. The spectrum efficiency gain of DC is slightly better than that of 64QAM due to the carrier scheduling gains i.e. having the possibility to select on a TTI basis the carrier which balances best radio conditions and resource availability.

The DC provides great advantages versus the single carrier case since a UE can receive additional throughput using the available capacity on 2 carrier frequencies. Considering f1 as the first carrier frequency used for R99 services and f2 as the carrier frequency used for the HSPA services, the DC gain is highly influenced by the amount of load on f1, by the burstiness of the load (high variance versus low variance), since a bursty load provides several unused TTIs (Transmission Time Intervals) with high available power to be used.

As an example, currently in almost all 3G deployments where 2 carriers are deployed, the first carrier is already assigned for use to R99 voice traffic -hence the load can be such that potential resources available for DC on f1 are more or less scarce depending whether the considered site is urban, suburban, or rural. Furthermore, when sharing a carrier frequency between Rel'99 and HSPA services the maximum HSPA power is sometimes capped in order to not affect the voice quality and related KPIs e.g. call drop rate due to handover failures following the impact of HDSPA power on CPICH Ec/No as perceived by the UE. In this situation, if the load on f1 is quite high, the additional throughput would be limited.

A typical scenario for which the selection of MIMO or DC needs to be decided is the following:

- N carrier frequencies available in the cell.
- MIMO supported in one of the carrier frequency.
- Rel'99 and HSDPA (single carrier non MIMO terminals) also supported.

According to a preferred embodiment of the invention, the UE on a specific radio condition (CQI) will be assigned MIMO when the expected throughput with MIMO ($TH_{MIMO}$) is greater than the expected throughput with DC ($TH_{DC}$), which can be expressed as:

$$TH_{MIMO} > TH_{DC} \quad (1)$$

First step is to select the most adequate carrier frequencies to be used for MIMO and for DC:

- For MIMO, the least loaded carrier frequency enabled for MIMO will be the most adequate, which can be called $F_M$.
- For DC when there are more than 2 carriers, then the 2 least loaded carrier frequencies supporting DC will be selected. The least loaded carrier frequency will be $F_M$; the other one will be named $F_{DC2}$.

Then, expected throughput with DC ($TH_{DC}$) can be expressed as the expected throughput in $F_M$ without MIMO ($TH(F_M)_{NO\_MIMO}$) plus the additional expected throughput the UE can get by also using $F_{DC2}$ as part of DC ($\Delta TH(F_{DC2})_{DC}$). Then, $TH_{DC}$ can be expressed as:

$$TH_{DC} = TH(F_M)_{NO\_MIMO} + \Delta TH(F_{DC2})_{DC} \quad (2)$$

Therefore, the UE will be assigned MIMO when the expected throughput in $F_M$ with MIMO ($TH(F_M)_{MIMO}$) is greater than $TH_{DC}$ as previously expressed:

$$TH(F_M)_{MIMO} > TH(F_M)_{NO\_MIMO}+ \Delta TH(F_{DC2})_{DC} \qquad (3)$$

The expected throughput in $F_M$ with MIMO $TH(F_M)_{MIMO}$ can be expressed as:

$$TH(F_M)_{MIMO}= \text{expected tput in } F_M \text{ without MIMO}*(1 + \text{MIMO Gain}) \qquad (4)$$

Since the expected throughput in $F_M$ without MIMO can be expressed as $TH(F_M)_{NO\_MIMO}$, and MIMO Gain as $G_{MIMO}$, the previous formula is expressed as:

$$TH(F_M)_{MIMO} = TH(F_M)_{NO\_MIMO} \cdot (1 + G_{MIMO}) \qquad (5)$$

Therefore, using MIMO is preferably over DC if:

$$TH(F_M)_{NO\_MIMO} \cdot (1 + G_{MIMO}) > TH(F_M)_{NO\_MIMO}+ \Delta TH(F_{DC2})_{DC} \qquad (6)$$

Each of the items above are functions of CQI and occupied TX Power in $F_M$ by other traffic as well as by the traffic characteristics, that, through the scheduler implementation, will turn into specific variance of the transmitted power.
The condition above is evaluated as a function on the CQI experienced by the UE on $F_M$ and $F_{DC2}$. $TH(F_M)_{NO\_MIMO}(CQI)$ can be modelled as a function of the available resources for HSPA transmission in the cell, i.e. TX power available for HS (denoted "Pfree"), Codes. Thus,

$$TH(F_M)_{MIMO} = \text{MAXRateHS (CQI, Pfree for HS, code available for HS)} \qquad (7)$$

where MAXRateHS denotes the maximum throughput that would be achieved with HSDPA for a given level of CQI, a given power available for HSDPA and a given number of HSDPA codes available.
From simulations it has been observed that the gain of Dual Cell respect to Single Carrier is linked to the likelihood of there being free resources for transmission in $F_{DC2}$ since the scheduler can take advantage of any free TTI or free code per TTI on $F_{DC2}$ to transmit packets of a DC UE.
The expected throughput in a DC transmission can be expressed as the average amount of throughput that is achievable on both carriers:

$$TH_{DC} = \text{MAXRateHS (CQI in } F_M, \text{ Pfree for HS in } F_M, \text{ code available for HS in } F_M) + \text{MAXRateHS}$$
$$\text{(CQI in } F_{DC2}, \text{ Pfree for HS in } F_{DC2}, \text{ code available for HS in } F_{DC2}). \qquad (8)$$

The condition for selecting MIMO preferably to DC on next TTI would therefore be:

$$\text{MAXRateHS (CQI in } F_M, \text{ Pfree for HS in } F_M, \text{ code available for HS in } F_M) \cdot (1 + G_{MIMO}(CQI)) >$$
$$\text{MAXRateHS (CQI in } F_M, \text{ Pfree for HS in } F_M, \text{ code available for HS in } F_M) + \text{MAXRateHS (CQI in}$$
$$F_{DC2}, \text{ Pfree for HS in } F_{DC2}, \text{ code available for HS in } F_{DC2}) \qquad (9)$$

The previous formula can be simplified. Whilst the formula above would allow a perfect choice on a TTI basis, there is the need to come up with a calculation that does not need to be executed on each TTI, and that, based on the average load and HSDPA usage in the cells, is able to predict the future cell conditions and come up with a proper decision to be applied at call set-up or sometimes during the call.
In a first formula simplification, it can be assumed that MAXRateHS is directly proportional to the amount of power available for HS as well as to the average number of codes available for HSDPA on average (i.e. taking away the codes used for Rel'99 traffic and by the existing HSDPA transmission). Then:

$$MAXRateHS = Alfa(CQI) * (Pfree\ for\ HS) * (free\ HS\ codes/15) \qquad (10)$$

where *Alfa(CQI)* is a factor which represents the throughput that would be achieved with 15 codes and full HSDPA power available for a given CQI. This can be simulated or obtained through the experimental tests and can be expressed as a function or a table of values from 0 to 30 to cover the full the CQI range. The CQI is the Channel Quality Indicator and it is a parameter defined in the 3GPP standards (TS 25.214). It should be noted that the CQI definition can vary according to the HSDPA UE category, so the *Alfa(CQI)* will be different depending on the UE category that is under evaluation. Then there will be different tables for different UE categories.

The previous formula would become:

$$Alfa\ (CQI\ in\ F_M) * Pfree\ for\ HS\ (F_M) * (average\ free\ HS\ codes\ in\ F_M/15) * (1 + G_{MIMO}\ (CQi)) >$$
$$Alfa\ (CQI\ in\ F_M) * Pfree\ for\ HS\ (F_M) * (average\ free\ HS\ codes\ in\ F_M/15) + Alfa\ (CQI\ in\ F_{DC2}) *$$
$$Pfree\ for\ HS\ (F_{DC2}) * (average\ free\ HS\ codes\ in\ F_{DC2}/15) \qquad (11)$$

Therefore:

$$Alfa\ (CQI\ in\ F_M) * Pfree\ for\ HS\ in\ F_M * (average\ free\ HS\ codes\ in\ F_M/15) * G_{MIMO}\ (CQI\ F_M) >$$
$$Alfa\ (CQI\ in\ F_{DC2}) * Pfree\ for\ HS\ in\ F_{DC2} * (average\ free\ HS\ codes\ in\ F_{DC2}/15) \qquad (12)$$

In a second formula simplification, it can be assumed that the average CQI in the 2 carriers will be the same for the UE, i.e. Alfa (CQI in $F_M$) = Alfa (CQI in $F_{DC2}$).

Thus, MIMO will be selected if:

$$Pfree\ for\ HS\ in\ F_M * (average\ free\ HS\ codes\ in\ F_M/15) * G_{MIMO}\ (CQI\ F_M) > Pfree\ for\ HS\ in\ F_{DC2} *$$
$$(average\ free\ HS\ codes\ in\ F_{DC2}/15) \qquad (13)$$

From a practical point of view, the RNC at call set-up will decide if the UE will be using DC or MIMO. Any of the formula above, or any other similar or equivalent formula, has to therefore be applied based on the info available at the RNC at call set-up.

The formulas above can also be executed later on during the call after an amount of packets has been transmitted in order to better evaluate the radio conditions (e.g. the CQI) and re-evaluate resource availability.

Then the preferred procedure would be to perform a first selection at call setup based on the above-mentioned formulas, and then during the call evaluate the conditions and do the reconfiguration if needed.

At call setup CQI information is likely to not be available (unless HSPA was used in cell_FACH state), hence an assumption can be made on a CQI level based on other information available such as CPICH Ec/NO, CPICH RSCP, and Transmitted Carrier Power which allows to have an estimate of the radio conditions. One solution is to define an RNC level parameter representing the estimated radio conditions from the user with e.g. 3 basic levels (bad, medium, good) and use this parameter as an input to the formulas by assigning a CQI value to each radio condition level (for example: 15 for bad, 21 for medium, 26 for good). With this approach one can either use this parameter in order to derive the most efficient technology to use at call setup or derive the best value for this parameter based on current estimates available at call setup.

Another alternative at call setup is to make a selection between MIMO or DC based on a default RNC level parameter, and then perform a selection of the most appropriate technology based on the above formulas after call setup.

In order to perform a (re)-selection of the most appropriate technology between MIMO and DC after call setup, two types of trigger can be used:

1) Timers: perform a re-evaluation after a certain connection time and/or periodically e.g. every 10 minutes.
2) Resource availability on the carrier frequencies: the RNC monitors the available power and codes for HSDPA and decides to force a re-evaluation. This can be implemented in an event triggered way to save signalling

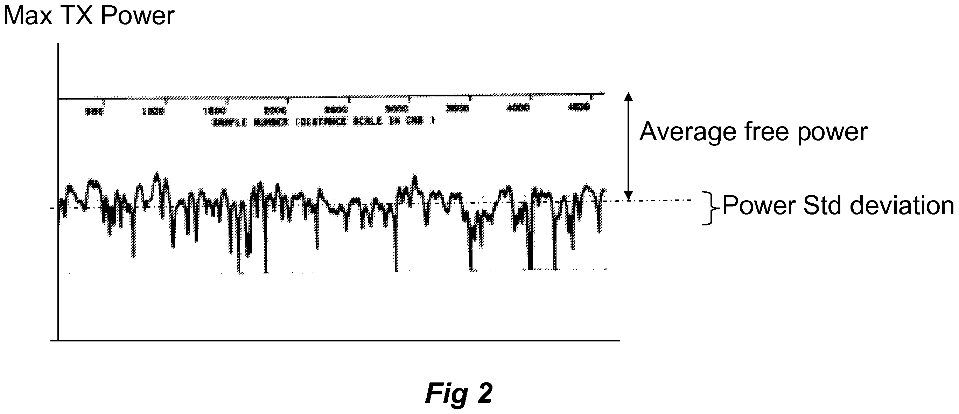

The probability to get a free TTI or an amount of codes in Downlink during HSDPA transmission could be calculated through the standard deviation of the transmitted TX Power. The standard deviation of the HSDPA transmitted power (as shown in the example of **Figure 2**) together with the average transmission power could be exploited in the above formulas. For example:

$$PFree \text{ for } HS = Min(Average \text{ free power} + \tfrac{1}{2} * Power \text{ Std Deviation}, MaxHSPower) \qquad (14)$$

where MaxHSPower is the maximum power available for HS). This allows to factor in the burstiness of the traffic when selecting between DC and MIMO

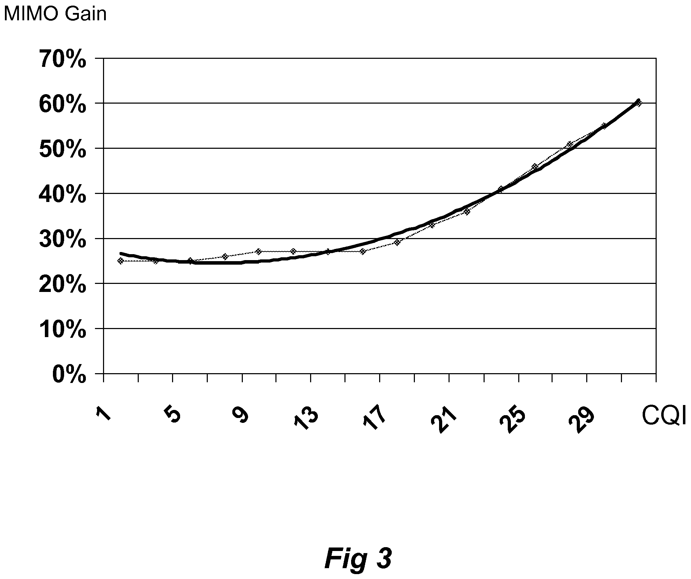

The MIMO gain (versus the single carrier HSPA baseline) could be given as a single value set by a parameter or a reference table per CQI. In this case, the decision should be taken knowing what the average CQI is at the time of the evaluation. Maybe it could be established with DC or MIMO first and then do a reconfiguration to the selected technology. For example the MIMO gain as a function of the CQI, can be approximated as represented in **Figure 3**.

There are other possible criteria to select between MIMO or DC at call setup or during the call:

○ Number of users currently using MIMO or DC in the system.
○ Traffic characteristic of a specific user

The selection between MIMO and DC operation can be based upon the number of users present in the cell(s) at a point in time e.g. balancing the number of calls in DC and the number of MIMO calls. For example, in case there are 4 MIMO calls and 2 DC calls, the next one will be DC. This is the simplest solution, easy to implement and enables performance optimisation if MIMO is selected, and an inter-carrier balancing and frequency utilisation efficiency if the DC feature is selected.

The selection between MIMO and DC operation can also be based upon the traffic characteristic of the user. In a typical 2 carrier 3G deployment where $F_{DC2}$ is used primarily for R99 services, DC benefits become apparent where most of the R99 traffic is non-voice, because (non HSPA) PS traffic is typically quite bursty in nature i.e. it is then possible for DC to take advantage and utilise the "free" TTIs.

It is not enough to attempt to re-use existing QoS classes to determine DC vs MIMO selection at establishment of those connections as this will not give the level of granularity needed over a specific point in time.

At user level in order to optimise capacity and user performance, the burstiness of the data traffic from the user could be categorised (continuous/bursty) at SRNC level by monitoring the MAC-d (Medium Access Control- dedicated) flow control. According to the activity factor estimated for the user (periodicity of data transfer/request to/from Node B), the SRNC will favour the use of MIMO for continuous traffic and DC for bursty traffic.

For example, the continuous data traffic can be detected with the number of bytes received during a window of time defined: minimum of cumulative received bytes (CRB). Value CRB will be also the minimum data size it wants to be considered as long continuous traffic.

At call setup as mentioned above a parameter can be used to start the data call as MIMO or DC by default, afterwards the categorisation of data traffic for the user is updated during the connection.

Both cell level and user level criteria can be used in the selection process between MIMO and DC by appropriate selection of thresholds. For example for continuous traffic the cell level load based algorithm can be used and for bursty traffic DC would have higher priority. This bursty traffic is detected based on the activity factor. The activity factor is the percentage of the time in which the user is active. If the activity factor is very low means that it transmit in a bursty way and DC is more suitable in this case.

QoS priority of the user can be taken also into account for the DC or MIMO decision. For example with a direct mapping of the priority (SPI, namely Scheduling Priority Indicator) into the selected option, which could be combined with the previous algorithm. The next table is an example:

| SPI | MIMO / DC choice |
|---|---|
| 1 | Optimum throughput algorithm |
| 2 | Always DC |
| ... | |
| 15 | Always MIMO |

These criteria can be further expanded in order to cover the following points:

- when there are many free resources in $F_{DC2}$, the MIMO/DC choice follows the optimum throughput algorithm for all the users.
- when the amount of free resources in $F_{DC2}$ becomes lower than a threshold, then only the highest SPIs are given the chance to maximize the throughput occupying $F_{DC2}$ resources with DC, whilst all the other SPIs will by default occupying resources on $F_M$ only, using MIMO.

**Claims**

1. A network element in a cellular telecommunications network for improving network performance, the network including at least one mobile terminal equipped with a plurality of receivers, the at least one mobile terminal being operable to communicate with the network element in a Multiple Input Multiple Output, MIMO, mode or in a dual cell mode using a plurality of radio carriers each having a transmission power and a plurality of High Speed Downlink Packet Access, HSDPA, codes, **characterized in that** the network element includes a decision making unit (1) arranged to:

   - determine a communication mode, in dependence upon at least one parameter associated with one or more of: the at least one mobile terminal; the network element; and the radio carriers, the communication mode being from among the following modes:

      - said MIMO mode;
      - said dual cell mode; and

   - instruct the mobile terminal to receive using said determined communication mode; and
   - wherein the at least one parameter comprises at least one of the following:

      - the power and HSDPA codes available for the plurality of radio carriers;
      - a Packet Switched, PS, data traffic characterisation of the at least one mobile terminal;
      - a Quality of Service, QoS, priority assigned to the at least one mobile terminal.

2. A network element as claimed in claim 1, wherein the at least one parameter comprises a network parameter.

3. A network element as claimed in claim 2, wherein the at least one parameter further comprises the number of mobile terminals communicating with the network element using MIMO and the number of mobile terminals communicating with the network element using dual cell.

4. A network element as claimed in any of claims 1-3, wherein the at least one parameter further comprises a channel quality indication reported by the at least one mobile terminal.

5. A network element as claimed in any of claims 1 to 4, wherein the at least one parameter comprises a number of mobile terminals per radio carrier for a given type of service.

6. A network element as claimed in any one of claims 1 to 5, wherein in order to determine the communication mode for the at least one mobile terminal, the decision making unit (1) is configured to:

   calculate an expected throughput obtained with MIMO mode and an expected throughput obtained with dual cell mode;
   determine MIMO mode as the communication mode for the mobile terminal when the expected throughput with MIMO mode is greater than the expected throughput with dual cell mode, and determine dual cell mode as the communication mode when the expected throughput with MIMO mode is lower than the expected throughput with dual cell mode.

7. A network element as claimed in any one of claims 1 to 6, wherein the decision making unit (1) is arranged to determine the communication mode for the mobile terminal, and instruct the mobile terminal accordingly, in at least one of the following situations:

   - at call set-up;
   - during a call.

8. A method of operating a cellular telecommunications network to improve the network performance, the network including at least one mobile terminal equipped with a plurality of receivers, the at least one terminal being operable to communicate with the network element in a Multiple Input Multiple Output, MIMO, mode and in a dual cell mode using a plurality of radio carriers each having a transmission power and a plurality of High Speed Downlink Packet Access, HSDPA, codes, **characterized in that** the method comprises:

> obtaining at least one parameter associated with one or more of: the at least one mobile terminal; the network element; and the radio carriers;
> determining a communication mode, in dependence upon said at least one parameter, the communication mode for the mobile terminal being from among the following modes:
>
> > - said MIMO mode;
> > - said dual cell mode; and
>
> instructing the mobile terminal to receive using said determined mode;

and wherein the at least one input parameter comprises at least one of the following:

> - the power and HSDPA codes available for the plurality of radio carriers;
> - a Packet Switched, PS, data traffic characterisation of the at least one mobile terminal;
> - a Quality of Service, QoS, priority assigned to the at least one mobile terminal.

9. A method as claimed in claim 8, further comprising: determining, using an HSDPA category information of the at least one mobile terminal, whether the at least one mobile terminal is operable to communicate with the network element in a MIMO mode or in a dual cell mode.

10. A method as claimed in claim 9, wherein the at least one parameter further comprises a channel quality indication reported by the at least one mobile terminal.

11. A method as claimed in any of claims 9 to 10, wherein the at least one input parameter further comprises a number of mobile terminals per radio carrier for a given type of service.

12. A method as claimed in any one of claims 8 to 11, wherein in the step of determining the working mode for the mobile terminal comprises:

> calculating an expected throughput obtained with MIMO mode and an expected throughput obtained with dual cell mode;
> determining MIMO mode as the communication mode for the mobile terminal when the expected throughput with MIMO mode is greater than the expected throughput with dual cell mode, and determining dual cell mode as the communication mode when the expected throughput with MIMO mode is lower than the expected throughput with dual cell mode.

13. A method as claimed in any one of claims 8 to 12, wherein the steps of determining the communication mode for the mobile terminal and instructing the terminal accordingly, are carried out in at least one of the following situations:

> - at call set-up;
> - during a call.

**Patentansprüche**

1. Ein Netzwerkelement in einem zellularen Telekommunikationsnetzwerk zur Verbesserung der Netzwerkleistung, wobei das Netzwerk mindestens ein mobiles Endgerät aufweist, das mit mehreren Empfängern ausgestattet ist, wobei das mindestens eine mobile Endgerät betriebsfähig ist, um mit dem Netzwerkelement in einem "Multiple Input Multiple Output"-Modus (MIMO-Modus) oder einem Dual-Cell-Modus zu kommunizieren, wobei mehrere Funkträger verwendet werden, die jeweils eine Sendeleistung und eine Vielzahl an "High Speed Downlink Packet Access"-Codes (HSDPA) aufweisen, **dadurch gekennzeichnet, dass** das Netzwerkelement eine Entscheidungsfindungseinheit (1) aufweist, die für die folgenden Zwecke eingerichtet ist:

> - Festlegen einer Kommunikationsart in Abhängigkeit von mindestens einem Parameter, der mit dem mindestens einen mobilen Endgerät, dem Netzwerkelement und den Funkträgern verknüpft ist, wobei die Kommunikationsart durch einen der folgenden Modi gebildet wird:

- den genannten MIMO-Modus;
- den genannten Dual-Cell-Modus; und

- Anweisen des mobilen Endgeräts für den Empfang über die genannte festgelegte Kommunikationsart; und
- wobei der mindestens eine Parameter mindestens eines der folgenden Elemente umfasst:

- die Leistung und die HSDPA-Codes, die für die Vielzahl an Funkträgern verfügbar sind;
- eine Charakterisierung des paketvermittelten (Packet Switched, PS) Datenverkehrs für das mindestens eine mobile Endgerät;
- eine Priorisierung der Dienstgüte (QoS), die dem mindestens einen mobilen Endgerät zugewiesen wird.

2. Ein Netzwerkelement nach Anspruch 1, wobei der mindestens eine Parameter einen Netzwerkparameter aufweist.

3. Ein Netzwerkelement nach Anspruch 2, wobei der mindestens eine Parameter ferner die Anzahl der mobilen Endgeräte, die anhand von MIMO mit dem Netzwerkelement kommunizieren, sowie die Anzahl der mobilen Endgeräte umfasst, die anhand von Dual-Cell mit dem Netzwerkelement kommunizieren.

4. Ein Netzwerkelement nach einem der Ansprüche 1-3, wobei der mindestens eine Parameter ferner die Angabe der Kanalqualität umfasst, die von dem mindestens einen mobilen Endgerät angegeben wird.

5. Ein Netzwerkelement nach einem der Ansprüche 1 bis 4, wobei der mindestens eine Parameter eine Anzahl an mobilen Endgeräten pro Funkträger für einen jeweiligen Diensttyp umfasst.

6. Ein Netzwerkelement nach einem der Ansprüche 1 bis 5, wobei die Entscheidungsfindungseinheit (1) zwecks Ermittlung der Kommunikationsart für das mindestens eine mobile Endgerät für folgende Zwecke eingerichtet ist:

Berechnen eines erwarteten Durchsatzes, der mittels des MIMO-Modus erreicht wird, und eines erwarteten Durchsatzes, der mittels des Dual-Cell-Modus erreicht wird;
Festlegen des MIMO-Modus als Kommunikationsart für das mobile Endgerät, wenn der erwartete Durchsatz mit dem MIMO-Modus höher als der erwartete Durchsatz mit dem Dual-Cell-Modus ist, und Festlegen des Dual-Cell-Modus als Kommunikationsart, wenn der erwartete Durchsatz mit dem MIMO-Modus geringer als der erwartete Durchsatz mit dem Dual-Cell-Modus ist.

7. Ein Netzwerkelement nach einem der Ansprüche 1 bis 6, wobei die Entscheidungsfindungseinheit (1) eingerichtet ist, um die Kommunikationsart in mindestens einem der folgenden Fälle für das mobile Endgerät festzulegen und das mobile Endgerät entsprechend anzuweisen:

- im Rahmen des Verbindungsaufbaus;
- im Rahmen eines Anrufs.

8. Ein Verfahren für das Betreiben eines zellularen Telekommunikationsnetzwerks zur Verbesserung der Netzwerkleistung, wobei das Netzwerk mindestens ein mobiles Endgerät aufweist, das mit mehreren Empfängern ausgestattet ist, wobei das mindestens eine Endgerät betriebsfähig ist, um mit dem Netzwerkelement in einem "Multiple Input Multiple Output"-Modus (MIMO-Modus) und einem Dual-Cell-Modus zu kommunizieren, wobei mehrere Funkträger verwendet werden, die jeweils eine Sendeleistung und eine Vielzahl an "High Speed Downlink Packet Access"-Codes (HSDPA) aufweisen, **dadurch gekennzeichnet, dass** das Verfahren Folgendes umfasst:

Abrufen von mindestens einem Parameter, der mit dem mindestens einen mobilen Endgerät, dem Netzwerkelement und den Funkträgern verknüpft ist;
Festlegen einer Kommunikationsart in Abhängigkeit von dem genannten mindestens einem Parameter, wobei die Kommunikationsart durch einen der folgenden Modi gebildet wird:

- den genannten MIMO-Modus;
- den genannten Dual-Cell-Modus; und

Anweisen des mobilen Endgeräts für den Empfang mittels des genannten festgelegten Modus, und wobei mindestens ein Eingabeparameter mindestens eines der folgenden Elemente aufweist:

- die Leistung und die HSDPA-Codes, die für die Vielzahl an Funkträgern verfügbar sind;
- eine Charakterisierung des paketvermittelten (Packet Switched, PS) Datenverkehrs für das mindestens eine mobile Endgerät;
- eine Priorisierung der Dienstgüte (QoS), die dem mindestens einen mobilen Endgerät zugewiesen wird.

**9.** Ein Verfahren nach Anspruch 8, das weiter Folgendes umfasst:

Ermittlung anhand von Informationen zur HSDPA-Kategorie des mindestens einen mobilen Endgeräts, ob dieses Endgerät betriebsfähig ist, um mit dem Netzwerkelement in einem MIMO-Modus oder in einem Dual-Cell-Modus zu kommunizieren.

**10.** Ein Verfahren nach Anspruch 9, wobei der mindestens eine Parameter weiter die Angabe der Kanalqualität aufweist, die von mindestens einem mobilen Endgerät angegeben wird.

**11.** Ein Verfahren nach einem der Ansprüche 9 bis 10, wobei der mindestens eine Parameter weiter eine Anzahl an mobilen Endgeräten pro Funkträger für einen jeweiligen Diensttyp umfasst.

**12.** Ein Verfahren nach einem der Ansprüche 8 bis 11, wobei der Schritt zum Festlegen des Betriebsmodus für das mobile Endgerät Folgendes umfasst:

Berechnen eines erwarteten Durchsatzes, der mittels des MIMO-Modus erreicht wird, und eines erwarteten Durchsatzes, der mittels des Dual-Cell-Modus erreicht wird;
Festlegen des MIMO-Modus als Kommunikationsart für das mobile Endgerät, wenn der erwartete Durchsatz mit dem MIMO-Modus höher als der erwartete Durchsatz mit dem Dual-Cell-Modus ist, und Festlegen des Dual-Cell-Modus als Kommunikationsart, wenn der erwartete Durchsatz mit dem MIMO-Modus geringer als der erwartete Durchsatz mit dem Dual-Cell-Modus ist.

**13.** Ein Verfahren nach einem der Ansprüche 8 bis 12, wobei die Schritte zum Festlegen der Kommunikationsart für das mobile Endgerät und zum entsprechenden Anweisen des Endgeräts in mindestens einem der folgenden Fälle ausgeführt werden:

- im Rahmen des Verbindungsaufbaus;
- im Rahmen eines Anrufs.

## Revendications

**1.** Elément de réseau dans un réseau de télécommunications cellulaires destiné à améliorer la performance du réseau, le réseau comportant au moins un terminal mobile équipé d'une pluralité de récepteurs, l'au moins un terminal mobile étant exploitable pour communiquer avec l'élément de réseau dans un mode à entrées multiples, sorties multiples, MIMO, ou dans un mode à deux cellules en utilisant une pluralité de porteuses radio ayant chacune une puissance d'émission et une pluralité de codes d'accès à haut débit pour paquets de liaison descendante, HSDPA, **caractérisé en ce que** l'élément de réseau comprend une unité de prise de décision (1) agencée pour :

- déterminer un mode de communication, en fonction d'au moins un paramètre associé à un ou plusieurs de : l'au moins un terminal mobile ; l'élément de réseau; et les porteuses radio, le mode de communication étant l'un des modes suivants :

- ledit mode MIMO ;
- ledit mode à deux cellules ; et

- donner instruction au terminal mobile de recevoir en utilisant ledit mode de communication déterminé ; et
- dans lequel l'au moins un paramètre consiste en au moins l'un :

- de la puissance et des codes HSDPA disponibles pour la pluralité de porteuses radio ;

- d'une caractérisation de trafic de données à commutation de paquets, PS, de l'au moins un terminal mobile ;
- d'une priorité de qualité de service, QoS, assignée à l'au moins un terminal mobile.

2. Elément de réseau selon la revendication 1, dans lequel l'au moins un paramètre comprend un paramètre de réseau.

3. Elément de réseau selon la revendication 2, dans lequel l'au moins un paramètre comprend en outre le nombre de terminaux mobiles qui communiquent avec l'élément de réseau en utilisant le mode MIMO et le nombre de terminaux mobiles qui communiquent avec l'élément de réseau en utilisant le mode à deux cellules.

4. Elément de réseau selon l'une quelconque des revendications 1 à 3, dans lequel l'au moins un paramètre comprend en outre une indication de qualité de canal signalée par l'au moins un terminal mobile.

5. Elément de réseau selon l'une quelconque des revendications 1 à 4, dans lequel l'au moins un paramètre comprend un nombre de terminaux mobiles par porteuse radio pour un type de service donné.

6. Elément de réseau selon l'une quelconque des revendications 1 à 5, dans lequel afin de déterminer le mode de communication de l'au moins un terminal mobile, l'unité de prise de décision (1) est configurée pour :

    calculer un rendement prévu obtenu avec le mode MIMO et un rendement prévu obtenu avec le mode à deux cellules ;
    déterminer le mode MIMO comme mode de communication du terminal mobile quand le rendement prévu avec le mode MIMO est supérieur au rendement prévu avec le mode à deux cellules, et déterminer le mode à deux cellules comme mode de communication du terminal mobile quand le rendement prévu avec le mode MIMO est inférieur au rendement prévu avec le mode à deux cellules.

7. Elément de réseau selon l'une quelconque des revendications 1 à 6, dans lequel l'unité de prise de décision (1) est agencée pour déterminer le mode de communication du terminal mobile, et donner instruction au terminal mobile en conséquence, dans au moins l'une des situations suivantes :

    - à l'établissement d'un appel ;
    - durant un appel.

8. Procédé d'exploitation d'un réseau de télécommunications cellulaires pour améliorer la performance du réseau, le réseau comportant au moins un terminal mobile équipé d'une pluralité de récepteurs, l'au moins un terminal étant exploitable pour communiquer avec l'élément de réseau dans un mode à entrées multiples, sorties multiples, MIMO, et dans un mode à deux cellules en utilisant une pluralité de porteuses radio ayant chacune une puissance d'émission et une pluralité de codes d'accès à haut débit pour paquets de liaison descendante, HSDPA, **caractérisé en ce que** le procédé comprend :

    l'obtention d'au moins un paramètre associé à un ou plusieurs de : l'au moins un terminal mobile ; l'élément de réseau ; et les porteuses radio ;
    la détermination d'un mode de communication, en fonction dudit au moins un paramètre, le mode de communication du terminal mobile étant l'un des modes suivants :

        - ledit mode MIMO ;
        - ledit mode à deux cellules ; et

    l'instruction au terminal mobile de recevoir en utilisant ledit mode déterminé ;

    et dans lequel l'au moins un paramètre d'entrée comprend au moins l'un :

        - de la puissance et des codes HSDPA disponibles pour la pluralité de porteuses radio ;
        - d'une caractérisation de trafic de données à commutation de paquets, PS, de l'au moins un terminal mobile ;
        - d'une priorité de qualité de service, QoS, assignée à l'au moins un terminal mobile.

9. Procédé selon la revendication 8, comprenant en outre : la détermination, en utilisant une information de catégorie HSDPA de l'au moins un terminal mobile, que l'au moins un terminal mobile est exploitable pour communiquer avec l'élément de réseau dans un mode MIMO ou dans un mode à deux cellules.

**10.** Procédé selon la revendication 9, dans lequel l'au moins un paramètre comprend en outre une indication de qualité de canal signalée par l'au moins un terminal mobile.

**11.** Procédé selon l'une quelconque des revendications 9 à 10, dans lequel l'au moins un paramètre d'entrée comprend en outre un nombre de terminaux mobiles par porteuse radio pour un type de service donné.

**12.** Procédé selon l'une quelconque des revendications 8 à 11, dans lequel l'étape de détermination du mode de travail du terminal mobile comprend :

le calcul d'un rendement prévu obtenu avec le mode MIMO et d'un rendement prévu obtenu avec le mode à deux cellules ;
la détermination du mode MIMO comme mode de communication du terminal mobile quand le rendement prévu avec le mode MIMO est supérieur au rendement prévu avec le mode à deux cellules, et déterminer le mode à deux cellules comme mode de communication du terminal mobile quand le rendement prévu avec le mode MIMO est inférieur au rendement prévu avec le mode à deux cellules.

**13.** Procédé selon l'une quelconque des revendications 8 à 12, dans lequel les étapes de détermination du mode de communication du terminal mobile et d'instruction au terminal en conséquence sont exécutées dans au moins l'une des situations suivantes :

- à l'établissement d'un appel ;
- durant un appel.

Antenna 1    Antenna 2                    Antenna 1    Antenna 2

| RF Transmit Branch Frequency 1 | RF Transmit Branch Frequency 1 |

| RF Receive Branch Frequency 1 | RF Receive Branch Frequency 1 |

Baseband Processing

Radio Modem

**MIMO transmitter (UTRAN side)**

**MIMO receiver (UE side)**

*Fig 1*

EP 2 372 937 B1

## Max TX Power

**Fig 2**

MIMO Gain

*Fig 3*

EP 2 372 937 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007049218 A1